# EUROPEAN PATENT SPECIFICATION

(11) **EP 2 698 760 B1**
(45) Date of publication and mention of the grant of the patent: **21.06.2017**
(21) Application number: 13180062.5
(22) Date of filing: 12.08.2013
(51) Int. Cl.: G06Q 50/06, G06Q 10/10, G01D 4/00, G08C 17/00, G08C 17/02, H01R 13/66, H02J 13/00

(54) **Method and system for measuring the consumption of an electric device**
Verfahren und System zur Messung des Energieverbrauchs eines elektrischen Geräts
Procédé et système de mesure de la consommation d'energie d'un appareil electrique

(30) Priority: 13.08.2012 BE 201200547
(43) Date of publication of application: 19.02.2014
(73) Proprietor: Fifthplay NV, 9100 Sint-Niklaas (BE)
(72) Inventor: Van Haver, Karel, 9031 Drongen (BE); De Ruyck, Tim, 9000 Gent (BE); Verlinden, Bert, 3150 Haacht (BE)
(74) Representative: D'Halleweyn, Nele Veerle Trees Gertrudis

(56) References cited:
- EP-A2- 2 073 335
- WO-A1-2012/016589
- US-A1- 2012 060 044
- Anonymous: "Gebruikersgids smart energy box Smart thermostat touch Smart energy plug", Electrabel , 1 July 2012 (2012-07-01), page 71PP, XP002689629, Retrieved from the Internet: URL:https://www.electrabel.be/assets/be/re sidential/documents/conditions/Smart_Gebru ikersgids_NL_def.pdf [retrieved on 2012-12-17]
- Anonymous: "Smart Energy Box gebruikersgids", Electrabel , 30 June 2012 (2012-06-30), pages 1-33, XP002689630, Retrieved from the Internet: URL:https://www.electrabel.be/assets/be/re sidential/documents/guides/SEB_Installatio n-Guide_NL.pdf [retrieved on 2012-12-17]
- Anonymous: "Beheer uw elektrische toestellen met de Smart energy box", Electrabel , 17 December 2012 (2012-12-17), XP002689631, Retrieved from the Internet: URL:https://www.electrabel.be/nl/particuli er/gas-elektriciteit-stroom-leverancier-pr ijs-energie/smartenergybox?ns_mchannel=red irect&ns_source=residential&ns_campaign=sm artbox&ns_linkname=product&ebl_redirect=mi jnsmartenergybox [retrieved on 2012-12-21]

## Description

The present invention relates to a method and system for measuring the consumption of an electrical appliance or a load.

Typically, existing devices for measuring the consumption of an electrical appliance periodically measure the power consumed by the electrical appliance. These data can then be transmitted, for instance wirelessly, to a processing unit such as a PC. The drawback of periodic measurement is that a very large amount of data traffic is necessary to enable an accurate picture to be obtained of the consumption as a function of time.

Electrabel has a product on the market named 'smart energy box', which product is intended to provide insight in energy consumption of electrical devices. The operational details of this product are described in "Gebruikersgids smart energy box", dated July 1, 2012 and in "smart energy box gebruikersgids" dated June 30, 2012, which documents were both found on the internet by the European search division on December 17, 2012. EP2073335 describes a device for connecting an electrical appliance to the grid.

US2012/0060044 discloses a power node providing energy management and network expansion features. The power node may perform automatic reporting based on a changed state, wherein a processor of the power node may monitor one or more variables such as power, current and voltage. In an embodiment a change in a variable being monitored exceeding a threshold may trigger automatic reporting.

The present invention has for its object to provide a method and system of the above stated type with which said drawback is obviated and with which the consumption can be measured and processed as a function of time in a reliable manner.

An embodiment of a method according to the invention has the features of claim 1.

On the basis of the received signals a processing unit will thus be able to reconstruct very precisely the consumption of an electrical appliance as a function of time. An electrical appliance will after all typically display a consumption over time which fluctuates between predetermined levels. In the case of for instance a simple light source the consumption will either be zero or a predetermined power. In such situations use can be made of two ranges for the variable (not in accordance with claim 1), and only the transitions from the first range to the second, or vice versa, are of importance in being able to reconstruct the consumption as a function of time. According to the prior art method, such transitions can often not be precisely reconstructed because the moments at which measurement takes place do not necessarily correspond to these transitions. This problem is solved by the method according to the present invention. In the case the electrical appliance or the load displays a more complex power pattern, for instance in the case of a washing machine, the skilled person will appreciate that more than two ranges will typically be defined to enable accurate reconstruction of the consumption as a function of time.

In the context of the present invention the term electrical appliance refers more generally to a load with an electrical consumption.

According to an advantageous embodiment which is not in accordance with the invention as claimed, the detection of the transition entails verification as to whether the variable measured at successive points in time, following the transition from respectively the first range to the second or from the second range to the first, remains for a predetermined period in respectively the second or first range. It is noted that this period can be defined differently according to whether a transition from a first range to a second or from a second range to a first is involved. Only if the measured variable remains for a predetermined period in respectively the second range or the first is it decided that a transition has been detected. Detection of a transition is in this way avoided in the case of malfunction or measurement errors. According to a variant thereof, use is made of average values of the variable measured at successive points in time, wherein these average values must remain for a predetermined period in respectively the second range or the first, so that a decision would be made that a transition has taken place. Use is preferably made of at least two successive measured values or at least two successive average values of successive measured values. Use is still more preferably made of at least three successive average values. A transition can in this way be detected in a very reliable manner.

According to embodiments of the method, the consumption is thus measured periodically by the device but not communicated periodically to the processing unit. The data traffic between the device and the processing unit is in this way considerably limited, while a precise reconstruction of the consumption as a function of time is nevertheless possible in the processing unit.

According to an advantageous embodiment of the method, a time indication representative of the moment at which the variable moves from the first range to the second, or vice versa, is added to the signal. An average or momentary consumption can further be included in the signal. The average consumption is for instance calculated on the basis of at least two values of the variable measured following the transition. Reliability is further enhanced by also including the momentary or average consumption. Note that, instead of including an average consumption, it would also be possible to indicate whether the variable is located in the first or the second range following the transition.

Such a method of operation allows the user to configure the device remotely, i.e. from the processing unit which can for instance be a PC, a gateway, a smart phone or a tablet, in a suitable manner in accordance with the properties of the electrical appliance.

According to a further developed embodiment of the method, the device is also able to receive one or more sampling parameters from the remotely located processing unit and, on the basis of these sampling parameters, to set the predetermined period for which the consumption must be in a determined range following a transition and/or to set the measuring period between successive times of measurement. The device can in this way be configured in a suitable manner in accordance with the electrical appliance for which the device is intended.

The signals transmitted by the device can be transmitted wirelessly to the processing unit, although it is also possible for the signal to be sent via a bus to the processing unit.
The method can further comprise a step in which the processing unit transmits a control signal to the device when the consumption as a function of time fulfills determined conditions. If for instance the processing unit determines that the consumption of a washing machine is too high during daytime, the processing unit can then send a control signal to the device for the purpose of switching off the washing machine and for switching the washing machine on again when the night rate is valid.

According to yet another aspect of the invention, there is provided a system according to claim 3.
The storage means and the processing means can form part of a microcontroller.

According to a possible embodiment, the first connecting means are configured to receive a plug of an electrical appliance, and the second connecting means are configured to be insertable into a socket outlet. The device can in this way be interposed in simple manner between the electrical appliance and the mains supply.

In the case the signals are transmitted wirelessly, the transmitting means typically comprise an RF transceiver and an antenna. In the case the signals are transmitted over a bus, transmitting means adapted to the bus are provided.

According to a possible variant, the housing of the device takes the form of a typical module intended for placing in a consumer unit and configured so as to be mountable on a DIN rail of a consumer unit. The device can in this way be used to measure a load consisting of one or more electrical appliances included in the same circuit.

The processing means of the device can further be configured to perform detection of a transition from the first range to the second, or vice versa, in any of the ways described above for the method.

According to an advantageous embodiment, the device further comprises a switch for interrupting the electrical connection between the electrical appliance and the mains supply. The device then preferably comprises a control for the switch which is configured to open or close the switch in accordance with a control signal received from the processing unit. This control signal can then for instance be based on the consumption reconstructed in the processing unit.

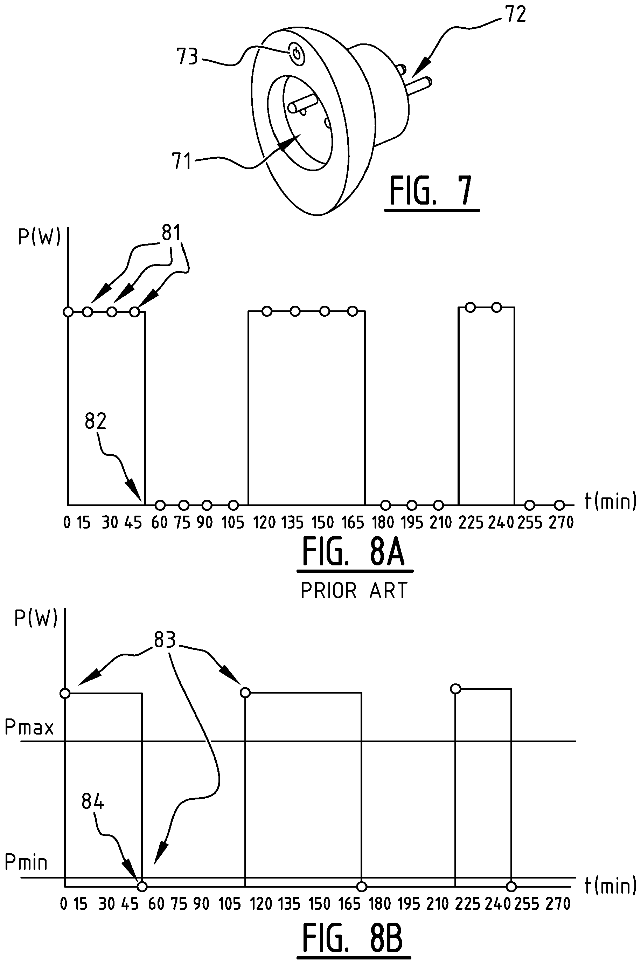

Advantages of embodiments of the invention include:
- less data communication takes place since continuous logging of the consumption graphs is not necessary by an external processing unit which polls the devices (for instance in the form of so-called smart plugs, see figure 7). The device monitors the consumption graphs internally and transmits only relevant transitions. This is a particular advantage in the case of wireless devices in which according to technical standards the RF data traffic has to remain limited;
- the method and system according to the invention provide the option of immediate response to relevant events and so provide a real-time feedback. In prior art polling mechanisms wherein a central processing unit polls the consumption data of the devices there is always a delay. The prior art central processing unit will, in the case of multiple devices, have to poll these continuously one after another. The method and device according to the invention ensure that continuous polling of the appliances is no longer necessary.
- real-time and direct feedback, this resulting in a better experience for the user.

In addition to tracking the consumption of an electrical appliance, the method and system according to the invention make it possible to provide real-time lists of the current (highest) consumers in a dwelling and to display these, for instance in the form of a graph, on a screen. Embodiments of the invention further allow electrical appliances which are in standby mode to be completely switched off under determined conditions, and users to be given a warning in the case of exceptional consumption of an electrical appliance or in the case of a deviating consumption profile. Greater safety can in this way be guaranteed and defective electrical appliances can for instance be detected. In addition, the lifespan of an electrical appliance such as a lamp can for instance be determined on the basis of the consumption profile, and so on.

The present invention will be further elucidated on the basis of a number of by no means limitative exemplary embodiments of the method and system according to the invention which are illustrated in the accompanying drawings, in which:
Figure 1 is a schematic view of an environment in which embodiments of a method and system according to the invention are usable;
Figure 2 illustrates schematically a first embodiment of a method;
Figure 3 illustrates schematically a second embodiment of a method according to the invention;
Figure 4 shows a flow diagram of an embodiment of a method;
Figure 5 illustrates schematically a third embodiment of a method according to the invention;
Figure 6 shows a block diagram of an embodiment of the device according to the invention;
Figure 7 illustrates schematically a housing according to an embodiment of the device of the invention; and
Figures 8A and 8B illustrate advantages of an embodiment.

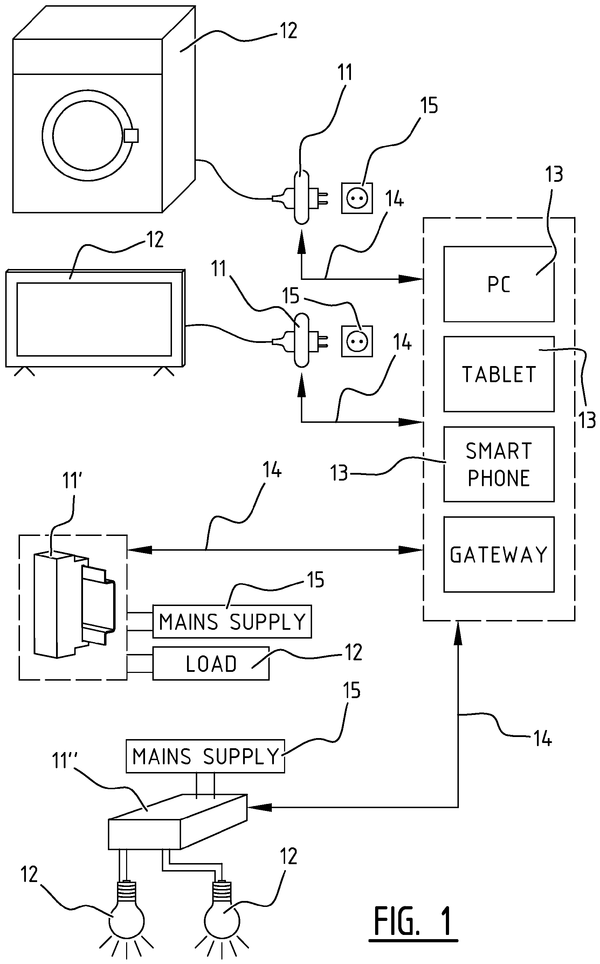

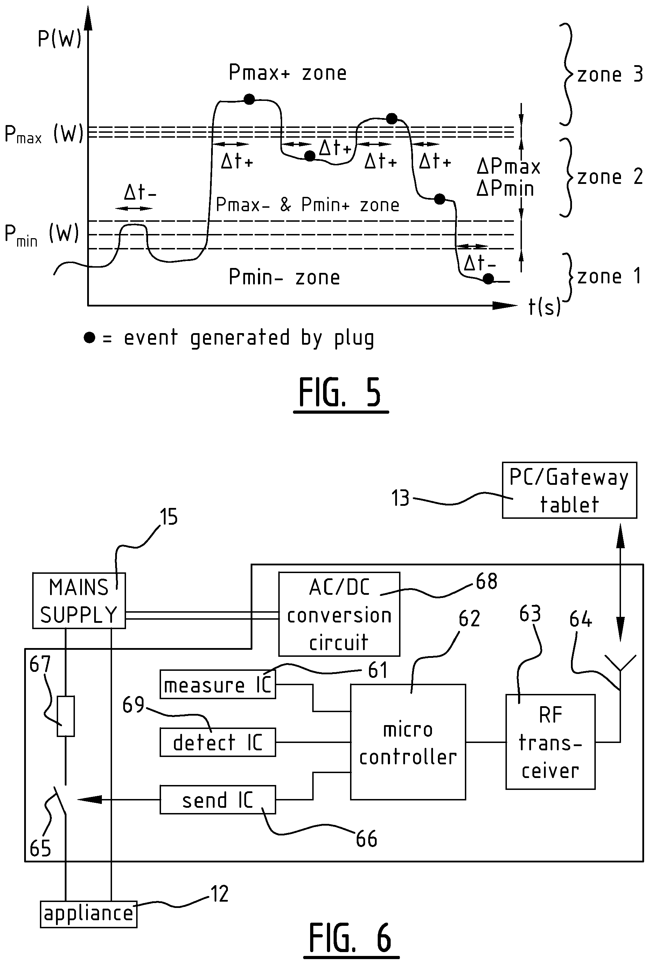

Figure 1 illustrates schematically an environment in which embodiments of the method and system according to the invention are used. The environment, for instance a house, typically comprises a number of electrical appliances, for instance domestic appliances such as a washing machine or a dishwasher, electronic devices 12 such as a TV or stereo installation, lamps and so on, for which it is useful to the user to know the consumption thereof as a function of time. Provided for this purpose between an electrical appliance 12 and the mains supply 15 is a device 11 which can communicate with a processing unit 13, such as a PC, a tablet, a smart phone or a gateway. This communication 14 can for instance be wireless or via a bus connection. Device 11 is configured to connect an electrical appliance 12 electrically to mains supply 15 and to measure a variable representative of the momentary consumption of the electrical appliance. A possible embodiment of a suitable device will be further discussed with reference to figure 6. Device 11 can have a housing, as will be further elucidated in figure 7, or can be embodied as a DIN module 11' which is configured for placing on a DIN rail in a consumer unit, or as build-in module 11" intended for instance for placing in a false ceiling. In addition, it is also possible to incorporate device 11 in existing socket outlets.

According to a possible embodiment of the method, the following steps are performed by device 11 of:
- measuring the electric power or a variable representative thereof at successive points in time;
- defining at least a first and a second range in which the consumption can be located, for instance on the basis of adjustable parameters sent by processing unit 13 to device 11;
- detecting in device 11 a transition of the consumption from the first range to the second range, and vice versa; and
- transmitting a signal from device 11 to a remotely located processing unit 13 when a transition is detected. This signal is indicative of the detection of a transition from the first range to the second or from the second range to the first, and typically comprises an identification of device 11 or of the electrical appliance 12 to which the device is connected.

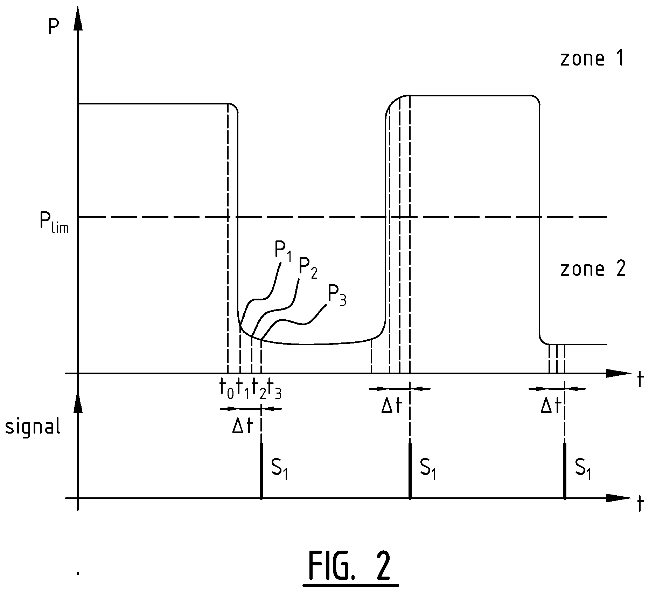

A first possible embodiment of the method is illustrated on the basis of figure 2. In the illustrated variant two zones or ranges have been defined in which the measured power can be located: a zone 1 over which the power is greater than P_{LIM} and a zone 2 over which the power is less than or equal to P_{LIM}. It is assumed in the illustrated figure that the power is determined at successive points in time t₀, t₁, t₂, t₃ etc. Note that the power P₁ at time t₁ can itself be an average of a number of successive measurements performed by a measuring module at successive points in time during the period [t₀, t₁]. In similar manner P₂ at time t₂ can be the average of the power at successive points in time during the period [t₁, t₂]. If the power decreases from zone 1 to zone 2, it is then determined that a transition has taken place from zone 1 to zone 2 when the power P is located at successive points in time in zone 2. Verification is made in the example as to whether the power P is located in zone 2 at times t₁, t₂ and t₃.

It is possible here for processing unit 13 to send a sampling parameter settable by a user to device 11 for the purpose of setting a time duration Δt. This time duration Δt then determines how many successive measurements must be used in order to decide that a transition has taken place from zone 1 to zone 2 or vice versa. If a transition has been detected, a signal S₁ is sent from device 11 to processing unit 13, as shown schematically in figure 2. This signal S₁ will typically comprise an identification of the device or of the electrical appliance and optionally a time indication of the moment at which the transition took place. In addition, the signal S₁ will typically also comprise an average value of the power that has been measured following the transition, for instance the average of P₁, P₂ and P₃ determined at points in time t₁, t₂ and t₃, or a value of the momentary consumption measured following the transition, for instance P₁ or P₃. The period between the successive points in time t₁, t₂ and t₃ can for instance lie between 0.1 and 10 s, and is preferably less than 1 s. The time duration Δt lies for instance between 0.5 and 30 s, and preferably lies between 0.5 and 5 s.

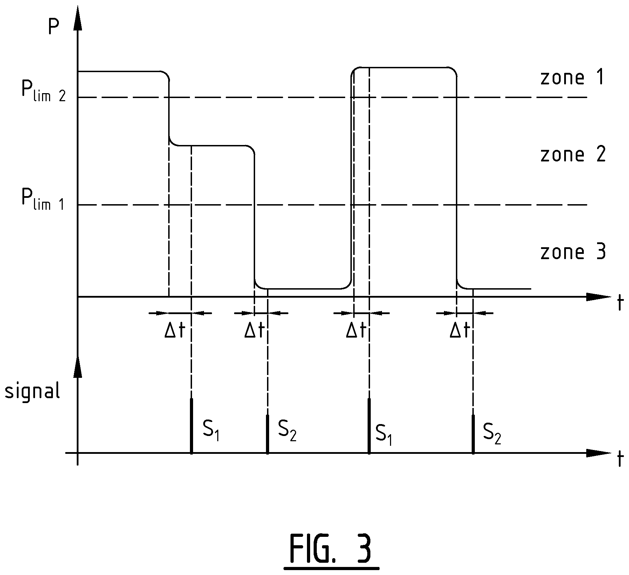

Figure 3 illustrates a second embodiment of the method according to the invention in which three ranges (three zones) are defined: zone 1, zone 2 and zone 3. According to this embodiment, transitions from zone 1 to zone 2, from zone 1 to zone 3, from zone 2 to zone 3, from zone 3 to zone 2, from zone 2 to zone 1 and from zone 3 to zone 1 are detected. An appropriate signal will be sent from device 11 to processing unit 13 for each transition. Note that at least two different indications are necessary to enable processing unit 13 to track the power consumption. The following conventions can thus be followed:

| **Transition** | **Indication** |
|---|---|
| zone 1 to zone 2 | S₁ |
| zone 1 to zone 3 | S₂ |
| zone 2 to zone 1 | S₁ |
| zone 2 to zone 3 | S₂ |
| zone 3 to zone 1 | S₁ |
| zone 3 to zone 2 | S₂ |

On the basis of the indication and the previous zone in which the power is located the processing unit 13 will be able to derive the following zone. The average or momentary consumption is typically also transmitted here in the signal, thereby incorporating an additional check. In addition, this average or momentary consumption in combination with the indication will allow the relevant transition to be derived even in the case that the previous zone is not known.

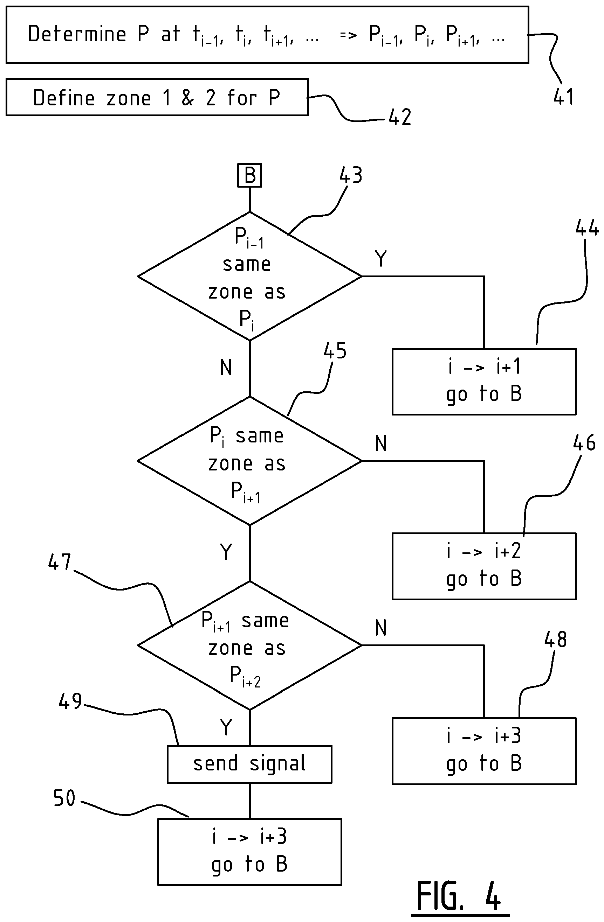

A possible algorithm for performing the method will now be illustrated with reference to figure 4. In a first step 41 the power is determined at successive points in time tᵢ₋₁, tᵢ, tᵢ₊₁, ... This gives powers Pᵢ₋₁, Pᵢ, Pᵢ₊₁, ... In the illustrated example it is assumed that use is made of two zones, and in step 42 these zones are defined for instance on the basis of parameters which can be entered by a user via processing unit 13 and which are transmitted by processing unit 13 to device 11. In a subsequent step 43 is verified whether the power Pᵢ₋₁ at an earlier point in time tᵢ₋₁ is located in the same zone as the power Pᵢ at a subsequent point in time t₁. If this is the case the algorithm goes back to the beginning and I is increased by 1. If Pᵢ₋₁ is not in the same zone as Pᵢ, the algorithm continues in step 45 where it is determined whether Pᵢ is in the same zone as Pᵢ₊₁. If this is not the case, I is increased by 2 and the algorithm returns to the beginning, see step 46. If this is the case, it is determined in step 47 whether Pᵢ₊₁ is in the same zone as Pᵢ₊₂. If this is not the case, the algorithm goes back to the beginning and I is increased by 3, see step 48. If this is the case, a signal is sent from device 11 to processing device 13 in order to indicate that a transition has taken place from zone 1 to zone 2 or vice versa. The signal can further comprise an average value of Pᵢ, Pᵢ₊₁ and Pᵢ₊₂, or a momentary value, for instance Pᵢ₊₂. In addition, the signal will typically comprise an identification of device 11 or of the electrical appliance 12 connected thereto.

The skilled person will appreciate the many modifications of the above illustrated algorithm are possible. It is thus possible for instance to make use of more or fewer than three power values in order to determine whether a transition has taken place. It is also possible to make use of more than two zones in which the power can be located.

Figure 5 illustrates a further developed embodiment in which a user, typically via processing unit 13, can set a number of parameters: P_{MIN}, P_{MAX}, ΔP_{MIN}, ΔP_{MAX}, Δt- and Δt+. The parameters P_{MIN}, P_{MAX}, ΔP_{MIN} and ΔP_{MAX} can then be used by device 11 to define three zones: zone 1, zone 2 and zone 3. Zone 1 corresponds for instance to a range between 0 and P_{MIN} - ΔP_{MIN} / 2, zone 2 to a range between P_{MIN} + ΔP_{MIN} / 2 and P_{MAX} - ΔP_{MAX} / 2, and zone 3 to a power greater than P_{MAX} + ΔP_{MAX} / 2. It is noted that between zone 1 and zone 2 a so-called neutral zone is present in which the measured signal can fluctuate without a transition being detected. Such a neutral zone is also present between zones 2 and 3. The method can then be further performed as described above with reference to figure 3, with the difference that a different period Δt- and Δt+ is used in the case of a P_{MIN} transition (i.e. from zone 1 to zone 2, from zone 2 to zone 1 or from zone 3 to zone 1) or a P_{MAX} transition, (i.e. from zone 3 to zone 2, from zone 2 to zone 3 or from zone 1 to zone 3).

Figure 6 illustrates an embodiment of a device according to the invention. The device comprises a measuring module with a shunt resistance 67 and a measurement IC 61. The measurement IC 61 is configured to measure a variable which is representative of the consumption of an electrical appliance 12 which is connected to the mains supply 15. The measurement IC 61 uses the voltage over shunt resistance 67 to determine the current through the appliance and further measures the voltage over the appliance. Device 11 further comprises a microcontroller 62 with storage means for storing the values of the consumption measured with the measurement IC 61 at successive points in time; and for storing at least a first and a second range in which the measured consumption can be located. In addition, microcontroller 62 comprises processing means configured to detect a transition of the variable from the first range to the second range and vice versa. Detection of this transition can for instance take place in one of the ways described above with reference to figures 2-5. Device 11 further comprises transmitting means in the form of an RF transceiver 63 and an antenna 64. These transmitting means 63, 64 are intended for the purpose of sending a signal to a remotely located processing unit 13 when a transition is detected, wherein the signal is indicative of a transition from the first range to the second, or vice versa, and typically comprises an identification of device 11 or of electrical appliance 12. The device further comprises a switch 65 which is controlled by a control IC 66. Switch 65 is intended for the purpose of interrupting the electrical connection between the electrical appliance and the mains supply. The control IC 66 is controlled by microcontroller 62 and is configured to open or close the switch in accordance with a control signal received from processing unit 13 via antenna 64. A processing unit 13 can for instance thus decide to open the switch if the power at a determined time of the day exceeds a determined value. It may for instance be desirable to operate a washing machine only at night, and processing unit 13 can control the device 11 such that switch 65 is opened if the machine were nevertheless to be switched on during the day, and that switch 65 is closed again after a determined point in time. Device 11 can optionally further comprise a detection circuit 69 for detecting loss of the mains voltage when the device is for instance disconnected from mains supply 15. When such a disconnection is detected, microcontroller 62 can write determined data to the memory such that it is not lost. Finally, the device comprises an AC/DC conversion circuit 68 for supplying a suitable supply voltage to the different components 61, 62, 63, 66, 69 of device 11.

Figure 7 illustrates a possible embodiment (also referred to as a smart plug) of a housing 70 of a device 11 according to the invention. Housing 70 is provided here with first connecting means in the form of a outlet socket 71 which can co-act with a plug (not shown) of an electrical appliance 12, for instance the plug of a washing machine. Housing 70 is further provided with second connecting means in the form of a plug 72 which is configured for insertion into a socket outlet (not shown). The components of figure 6 can further be incorporated in such a housing. The housing can further be provided with an on/off button 73 for manual switch-on and switch-off of appliance 12 via switch 65.

Finally, figures 8A and 8B illustrate the advantage compared to a normal polling mechanism. In a normal polling mechanism as illustrated in figure 8A, the power is retrieved periodically, for instance every 15 minutes, by a processing unit, see circles 81 in the graph. Such a technique has the drawback that a large amount of data are communicated and that a transition from a high power to a low power is not transmitted accurately, see for instance reference numeral 82: since the polling time does not correspond to the time at which the power decreases, the processing unit will not be able to make an accurate reconstruction of the power as a function of time. Figure 8B illustrates an embodiment of the method in which signals are sent only in the case of a transition, see reference numeral 83. Such a technique has the further advantage that a transition can be communicated accurately and in real-time, see reference numeral 84.

The present invention is not limited to the above described embodiments and the skilled person will appreciate that many modifications and variants can be envisaged within the scope of the invention, which is defined solely by the following claims.

## Claims

1. Method for measuring the consumption of an electrical appliance (12), comprising of:
- providing a device (11) between the electrical appliance (12) and the mains supply (15), which device (11) is configured to connect the electrical appliance (12) electrically to the mains supply (15) and to measure a variable representative of the consumption of the electrical appliance;
- the device (11) receiving one or more power-related parameters in respect of the electrical appliance from a remotely located processing unit (13);
- measuring said variable at successive points in time with this device (11); wherein the period between the successive points in time lies between 0.1 and 10 s; the method **characterised in**
- defining a first range, a second range and a third range in which the variable can be located based on the one or more power-related parameters, wherein said first, said second range and said third range are defined according to one of the following:
said first range corresponding with power values greater than PLIM2, said second range corresponding with power values between PLIM1 and PLIM2, and said third range corresponding with power values below PLIM1; wherein PLIM1 is smaller than PLIM2; or
said first range corresponding with power values between 0 and PMIN -DPMIN/2, said second range corresponding with power values between PMIN + DPMIN/2 and PMAX - DPMAX/2, and said third range corresponding with power values greater than PMAX + DPMAX/2; wherein 0 < (PMIN -DPMIN/2) < (PMIN + DPMIN/2) < (PMAX - DPMAX/2) < (PMAX + DPMAX/2);
- detecting in the device (11) a transition of the variable from the first range to the second range, from the first range to the third range, from the second range to the third range, from the third range to the second range, from the second range to the first range, and from the third range to the first range;
- upon detection of a transition of the variable from the first range to the second range or from the first range to the third range or from the second range to the third range or from the third range to the second range or from the second range to the first range or from the third range to the first range, transmitting a signal, from the device (11) to the remotely located processing unit (13), which signal is indicative of the detection of said transition and comprises an identification of the device (11) or of the electrical appliance (12); wherein a time indication representative of the moment of the transition, is added to the signal;
- reconstructing in the processing unit (13) the consumption of the electrical appliance (12) as a function of time on the basis of the received signals;
wherein either a value representative of the average or momentary power consumption is incorporated in the signal, which average or momentary consumption is determined on the basis of one or more values of the variable measured following the transition, or an indication is included in which range of said first, second and third range the variable was before the transition.

2. Method as claimed in claim 1, **characterized in that** the method further comprises:
transmitting a control signal from the processing unit (13) to the device (11) when the consumption reconstructed in the processing unit (13) fulfills determined conditions;
wherein the device (11) optionally comprises a switch (65) for interrupting the electrical connection between the electrical appliance (12) and the mains supply (15), and the method optionally further comprises of:
opening or closing the switch (65) in accordance with the received control signal.

3. System comprising remotely located processing unit (13) and a device (11) for measuring the consumption of an electrical appliance (12),
said device (11) being configured for receiving one or more power-related parameters in respect of the electrical appliance from the remotely located processing unit (13);
said device comprising a housing (70) with first connecting means (71) configured for connection to the electrical appliance (12), and with second connecting means (72) configured for connection to the mains supply (15), in which housing (70) are incorporated:
- a measuring module (61) configured to measure a variable representative of the consumption of the electrical appliance (12); wherein the period between the successive points in time lies between 0.1 and 10 s;
- storage means (62) for storing the values of said variable measured at successive points in time (to, t₁, t₂, t₃, etc) with the measuring module (61; **characterised in that**:
said storage means for storing a first range, a second range and a third range in which the variable can be located based on the one or more power-related parameters, wherein said first, said second range and said third range are defined based on the one or more power-related parameters, according to one of the following:
said first range corresponding with power values greater than PLIM2, said second range corresponding with power values between PLIM1 and PLIM2, and said third range corresponding with power values below PLIM1; wherein PLIM1 is smaller than PLIM2; or
said first range corresponding with power values between 0 and PMIN -DPMIN/2, said second range corresponding with power values between PMIN + DPMIN/2 and PMAX - DPMAX/2, and said third range corresponding with power values greater than PMAX + DPMAX/2; wherein 0 < (PMIN -DPMIN/2) < (PMIN + DPMIN/2) < (PMAX - DPMAX/2) < (PMAX + DPMAX/2);
- processing means (69) configured to detect a transition of the variable from the first range to the second range from the first range to the third range, from the second range to the third range, from the third range to the second range, from the second range to the first range, and from the third range to the first range;
- transmitting means (63,64) adapted for transmitting a signal, upon detection of a transition of the variable from the first range to the second range or from the first range to the third range or from the second range to the third range or from the third range to the second range or from the second range to the first range or from the third range to the first range, to the remotely located processing unit, which signal is indicative of said transition, and comprises an identification of the device (11) or of the electrical appliance (12); wherein a time indication representative of the moment of the transition, is added to the signal;
wherein the processing unit (13) is configured to reconstruct in the processing unit (13) the consumption of the electrical appliance (12) as a function of time on the basis of the received signals;
wherein either a value representative of the average or momentary power consumption is incorporated in the signal, which average or momentary consumption is determined on the basis of one or more values of the variable measured following the transition, or an indication is included in which range of said first, second and third range the variable was before the transition.

4. System as claimed in claim 3, **characterized in that** the first connecting means (71) are configured to receive a plug and that the second connecting means (72) are configured to be insertable into a socket outlet.

5. System as claimed in claim 3 or 4, **characterized in that** the transmitting means (63,64) comprise an RF transceiver (63) and an antenna (64).

6. System as claimed in any of the claims 3-5, **characterized in that** the device (11) is configured so as to be mountable on a DIN rail of a consumer unit.

7. System as claimed in any of the claims 3-6, further comprising:
a switch (65) for interrupting the electrical connection between the electrical appliance (12) and the mains supply (15); and a control (66) for the switch (65), which control (66) is configured to open or close the switch (65) in accordance with a control signal received from the processing means (69).

## Patentansprüche

1. Verfahren zum Messen des Verbrauchs eines elektrischen Geräts (12), umfassend:
- Bereitstellen einer Vorrichtung (11) zwischen dem elektrischen Gerät (12) und dem Netzanschluss (15), wobei die Vorrichtung (11) dafür ausgelegt ist, das elektrische Gerät (12) elektrisch mit dem Netzanschluss (15) zu verbinden und eine Variable zu messen, die für den Verbrauch des elektrischen Geräts steht;
- wobei die Vorrichtung (11) einen oder mehrere leistungsbezogene Parameter in Bezug auf das elektrische Gerät von einer an einem anderen Ort befindlichen Verarbeitungseinheit (13) empfängt;
- Messen der Variablen an aufeinanderfolgenden Zeitpunkten mit dieser Vorrichtung (11); wobei der Zeitraum zwischen den aufeinanderfolgenden Zeitpunkten zwischen 0,1 und 10s liegt;
wobei das Verfahren **gekennzeichnet ist durch**
- Definieren eines ersten Bereichs, eines zweiten Bereichs und eines dritten Bereichs, in denen die Variable liegen kann, auf Basis des einen oder der mehreren leistungsbezogenen Parameter, wobei der erste, der zweite Bereich und der dritte Bereich einer der folgenden Definitionen folgen:
der erste Bereich entspricht Leistungswerten von größer PLIM2, der zweite Bereich entspricht Leistungswerten zwischen PLIM1 und PLIM2 und der dritte Bereich entspricht Leistungswerten kleiner PLIM1; wobei PLIM1 kleiner ist als PLIM2; oder
der erste Bereich entspricht Leistungswerten zwischen 0 und PMIN -DPMIN/2, der zweite Bereich entspricht Leistungswerten zwischen PMIN + DPMIN/2 und PMAX - DPMAX/2 und der dritte Bereich entspricht Leistungswerten größer PMAX + DPMAX/2; wobei 0 < (PMIN -DPMIN/2) < (PMIN + DPMIN/2) < (PMAX -DPMAX/2) < (PMAX + DPMAX/2);
- Erfassen eines Übergangs der Variablen vom ersten Bereich auf den zweiten Bereich, vom ersten Bereich auf den dritten Bereich, vom zweiten Bereich auf den dritten Bereich, vom dritten Bereich auf den zweiten Bereich, vom zweiten Bereich auf den ersten Bereich und vom dritten Bereich auf den ersten Bereich in der Vorrichtung (11);
- nach der Erfassung eines Übergangs der Variablen vom ersten Bereich auf den zweiten Bereich oder vom ersten Bereich auf den dritten Bereich oder vom zweiten Bereich auf den dritten Bereich oder vom dritten Bereich auf den zweiten Bereich oder vom zweiten Bereich auf den ersten Bereich oder vom dritten Bereich auf den ersten Bereich: Senden eines Signals von der Vorrichtung (11) zu der an einem anderen Ort befindlichen Verarbeitungseinheit (13), wobei das Signal die Erfassung des Übergangs angibt und eine Kennung der Vorrichtung (11) oder des elektrischen Geräts (12) umfasst; wobei eine Zeitangabe, die für den Moment des Übergangs steht, dem Signal hinzugefügt wird;
- Rekonstruieren des Verbrauchs des elektrischen Geräts (12) in der Verarbeitungseinheit (13) als Funktion der Zeit auf Basis des empfangenen Signals;
wobei entweder ein Wert, der für den durchschnittlichen oder den momentanen Leistungsverbrauch steht, in das Signal eingebaut wird, wobei der durchschnittliche oder momentane Verbrauch auf Basis von einem oder mehreren Werten der Variablen bestimmt wird, die im Anschluss an den Übergang gemessen werden, oder eine Angabe aufgenommen wird, in welchem Bereich vom ersten, zweiten und dritten Bereich die Variable vor dem Übergang war.

2. Verfahren nach Anspruch 1, **dadurch gekennzeichnet, dass** das Verfahren ferner umfasst:
Senden eines Steuersignals von der Verarbeitungseinheit (13) an die Vorrichtung (11), wenn der in der Verarbeitungseinheit (13) rekonstruierte Verbrauch vorgegebene Bedingungen erfüllt;
wobei die Vorrichtung (11) optional einen Schalter (65) zum Unterbrechen der elektrischen Verbindung zwischen dem elektrischen Gerät (12) und dem Netzanschluss (15) umfasst und das Verfahren optional ferner umfasst:
Öffnen oder Schließen des Schalters (65) gemäß dem empfangenen Steuersignal.

3. System, eine an einem anderen Ort befindliche Verarbeitungseinheit (13) und eine Vorrichtung (11) zum Messen des Verbrauchs eines elektrischen Geräts (12) umfassend,
wobei die Vorrichtung (11) dafür ausgelegt ist, einen oder mehrere leistungsbezogene Parameter in Bezug auf das elektrische Gerät von der an einem anderen Ort befindlichen Verarbeitungseinheit (13) zu empfangen;
wobei die Vorrichtung ein Gehäuse (70) umfasst mit einer ersten Verbindungseinrichtung (71), die für einen Anschluss an das elektrische Gerät (12) ausgelegt ist, und mit einer zweiten Verbindungseinrichtung (72), die für einen Anschluss am Netzanschluss (15) ausgelegt ist, wobei in dem Gehäuse (70) untergebracht sind:
- ein Messmodul (61), das dafür ausgelegt ist, eine Variable zu messen, die für den Verbrauch des elektrischen Geräts (12) steht; wobei der Zeitraum zwischen den aufeinanderfolgenden Zeitpunkten zwischen 0,1 und 10 s liegt;
eine Speichereinrichtung (62) zum Speichern der an aufeinanderfolgenden Zeitpunkten (t₀, t₁, t₂, t₃, etc.) mit dem Messmodul (61) gemessenen Werte;
**gekennzeichnet dadurch dass:**
die Speichereinrichtung zum Speichern eines ersten Bereichs, eines zweiten Bereichs und eines dritten Bereichs, in denen die Variable liegen kann, auf Basis des einen oder der mehreren leistungsbezogenen Parameter, wobei der erste, der zweite Bereich und der dritte Bereich auf Basis des einen oder der mehreren leistungsbezogenen Parameter gemäß einem der folgenden definiert werden:
der erste Bereich entspricht Leistungswerten größer PLIM2, der zweite Bereich entspricht Leistungswerten zwischen PLIM1 und PLIM2 und der dritte Bereich entspricht Leistungswerten unter PLIM1; wobei PLIM1 kleiner ist als PLIM2; oder der erste Bereich entspricht Leistungswerten zwischen 0 und PMIN -DPMIN/2, der zweite Bereich entspricht Leistungswerten zwischen PMIN + DPMIN/2 uPMAX - DPMAX/2 und der dritte Bereich entspricht Leistungswerten größer PMAX + DPMAX/2; wobei 0 < (PMIN -DPMIN/2) < (PMIN + DPMIN/2) < (PMAX - DPMAX/2) < (PMAX + DPMAX/2);
- eine Verarbeitungseinrichtung (69), die dafür ausgelegt ist, einen Übergang der Variablen vom ersten Bereich auf den zweiten Bereich, vom ersten Bereich auf den dritten Bereich, vom zweiten Bereich auf den dritten Bereich, vom dritten Bereich auf den zweiten Bereich, vom zweiten Bereich auf den ersten Bereich und vom dritten Bereich auf den ersten Bereich zu erfassen;
- eine Sendeeinrichtung (63, 64), die dafür ausgelegt ist, nach der Erfassung eines Übergangs der Variablen vom ersten Bereich auf den zweiten Bereich oder vom ersten Bereich auf den dritten Bereich oder vom zweiten Bereich auf den dritten Bereich oder vom dritten Bereich auf den zweiten Bereich oder vom zweiten Bereich auf den ersten Bereich oder vom dritten Bereich auf den ersten Bereich ein Signal zu der an einem anderen Ort befindlichen Verarbeitungseinheit zu senden, wobei das Signal die Erfassung des Übergangs angibt und eine Kennung der Vorrichtung (11) oder des elektrischen Geräts (12) umfasst; wobei eine Zeitangabe, die für den Moment des Übergangs steht, dem Signal hinzugefügt wird; wobei die Verarbeitungseinheit (13) dafür ausgelegt ist, den Verbrauch des elektrischen Geräts (12) in der Verarbeitungseinheit (13) als Funktion der Zeit auf Basis des empfangenen Signals zu rekonstruieren;
wobei entweder ein Wert, der für den durchschnittlichen oder den momentanen Leistungsverbrauch steht, in das Signal eingebaut wird, wobei der durchschnittliche oder momentane Verbrauch auf Basis von einem oder mehreren Werten der Variablen bestimmt wird, die im Anschluss an den Übergang gemessen werden, oder eine Angabe aufgenommen wird, in welchem Bereich vom ersten, zweiten und dritten Bereich die Variable vor dem Übergang war.

4. System nach Anspruch 3, **dadurch gekennzeichnet, dass** die erste Verbindungseinrichtung (71) dafür ausgelegt ist, einen Stecker aufzunehmen, und dass die zweite Verbindungseinrichtung (72) dafür ausgelegt ist, in eine Steckdose eingeführt zu werden.

5. System nach Anspruch 3 oder 4, **dadurch gekennzeichnet, dass** die Sendeeinrichtung (63, 64) einen HF-Empfänger (63) und eine Antenne (64) umfasst.

6. System nach einem der Ansprüche 3-5, **dadurch gekennzeichnet, dass** die Vorrichtung (11) so gestaltet ist, dass sie an einer DIN-Schiene einer Verbrauchereinheit angebaut werden kann.

7. System wie in einem der Ansprüche 3-6 beansprucht, ferner umfassend:
einen Schalter (65) zum Unterbrechen der elektrischen Verbindung zwischen dem elektrischen Gerät (12) und dem Netzanschluss (15); und eine Steuerung (66) für den Schalter (65), wobei die Steuerung (66) dafür ausgelegt ist, den Schalter (65) gemäß einem Steuersignal, das von der Verarbeitungseinrichtung (69) empfangen wird, zu öffnen oder zu schließen.

## Revendications

1. Procédé de mesure de la consommation d'un appareil électrique (12), comprenant :
- fournir un dispositif (11) entre l'appareil électrique (12) et l'alimentation secteur (15), lequel dispositif (11) est adapté pour connecter électriquement l'appareil électrique (12) à l'alimentation secteur (15) et pour mesurer une variable représentative de la consommation de l'appareil électrique ;
- le dispositif (11) recevant un ou plusieurs paramètres liés à la puissance concernant l'appareil électrique provenant d'une unité de traitement située à distance (13) ;
- mesurer ladite variable à des instants successifs avec ce dispositif (11) ; dans lequel la période entre les instants successifs est entre 0,1 et 10 s;
le procédé étant **caractérisé en ce que**
- définir un premier intervalle, un deuxième intervalle et un troisième intervalle dans laquelle la variable peut être située en fonction du ou des paramètres liés à la puissance, dans lequel ladite premier, ledit deuxième et ledit troisième intervalle sont définis selon l'un des élément suivants :
ledit premier intervalle correspondant à des valeurs de puissance supérieures à PLIM2, ledit deuxième intervalle correspondant à des valeurs de puissance entre PLIM1 et PLIM2, et ledite troisième intervalle correspondant à des valeurs de puissance situées intérieures à PLIM1 ; PLIM1 étant inférieure à PLIM2 ; ou
ledit premier intervalle correspondant à des valeurs de puissance entre 0 et PMIN - DPMIN/2, ledite deuxième intervalle correspondant à des valeurs de puissance entre PMIN + DPMIN/2 et PMAX - DPMAX/2, et ledit troisième intervalle correspondant à des valeurs de puissance supérieures à PMAX + DPMAX/2 ; dans lequel 0 < (PMIN - DPMIN/2) < (PMIN+DPMIN/2) < (PMAX - DPMAX/2) < (PMAX + DPMAX/2) ;
- détecter dans le dispositif (11) une transition de la variable du premier intervalle au deuxième intervalle, du premier intervalle au troisième intervalle, du deuxième intervalle au troisième intervalle, du troisième intervalle au deuxième intervalle, du deuxième intervalle au premier intervalle, et du troisième intervalle au premier intervalle ;
- lors de la détection d'une transition de la variable du premier intervalle au deuxième intervalle ou du premier intervalle au troisième intervalle ou du deuxième intervalle au troisième intervalle ou du troisième intervalle au deuxième intervalle ou du deuxième intervalle au premier intervalle ou du troisième intervalle au premier intervalle, transmettre un signal du dispositif (11) à l'unité de traitement située à distance (13), lequel signal indique la détection de ladite transition et comprend une identification du dispositif (11) ou de l'appareil électrique (12) ; une indication de temps représentant le moment de la transition, est ajoutée au signal ;
- reconstruire dans l'unité de traitement (13) la consommation de l'appareil électrique (12) en fonction du temps en fonction des signaux reçus ;
dans lequel soit une valeur représentant la consommation électrique moyenne ou momentanée est intégrée dans le signal, laquelle consommation moyenne ou momentanée est déterminée en fonction d'une ou de plusieurs valeurs de la variable mesurées après la transition, soit une indication est incluse pour indiquer dans quel intervalle parmi lesdits premier, deuxième ou troisième intervalles la variable se trouvait avant la transition.

2. Procédé selon la revendication 1, **caractérisé en ce que** le procédé comprend en outre :
transmettre un signal de commande de l'unité de traitement (13) au dispositif (11) quand la consommation reconstituée dans l'unité de traitement (13) remplit certaines conditions ;
dans lequel le dispositif (11) comprend en option un interrupteur (65) servant à interrompre la connexion électrique entre l'appareil électrique (12) et l'alimentation secteur (15), et le procédé comprend en outre en option :
ouvrir ou fermer l'interrupteur (65) selon le signal de commande reçu.

3. Système comprenant une unité de traitement située à distance (13) et un dispositif (11) de mesure de la consommation d'un appareil électrique (12),
ledit dispositif (11) étant adapté pour recevoir un ou plusieurs paramètres liés à la puissance concernant ledit appareil électrique en provenance de l'unité de traitement située à distance (13) ;
ledit appareil électrique comprenant un boîtier (70) avec un premier moyen de connexion (71) conçu pour être connecté à l'appareil électrique (12), et avec un deuxième moyen de connexion (72) conçu pour être connecté à l'alimentation secteur (15), dans le boîtier (70) duquel sont intégrés :
- un module de mesure (61) adapté pour mesurer une variable représentant la consommation de l'appareil électrique (12) ; la période entre les instants successifs étant comprise entre 0,1 et 10 s. ;
- un moyen de stockage (62) servant à stocker les valeurs de ladite variable mesurées à des instants successifs (tₒ, t₁, t₂, t₃, etc.) avec le module de mesure (61) **caractérisé en ce que :**
ledit moyen de stockage servant à stocker un premier intervalle, un deuxième intervalle et un troisième intervalle dans laquelle la variable peut se trouver en fonction d'un ou de plusieurs paramètres liés à la puissance, ledit premier, ledit deuxième et ledit troisième intervalle étant définis en fonction d'un ou de plusieurs paramètres liés à la puissance, selon l'un des éléments suivants :
ledit premier intervalle correspondant à des valeurs de puissance supérieures à PLIM2, ledit deuxième intervalle correspondant à des valeurs de puissance intérieures à PLIM1 ; PLIM1 étant inférieure à PLIM2 ; ou
ledit premier intervalle correspondant à des valeurs de puissance entre 0 et PMIN - DPMIN/2, ledit deuxième intervalle correspondant à des valeurs de puissance entre PMIN + DPMIN/2 et PMAX - DPMAX/2, et ledit troisième intervalle correspondant à des valeurs de puissance supérieures à PMAX + DPMAX/2 ; où 0 < (PMIN-DPMIN/2) < (PMIN + DPMIN/2) < (PMAX - DPMAX/2) < (PMAX + DPMAX/2) ;
- un moyen de traitement (69) adapté pour détecter une transition de la variable du premier intervalle au deuxième intervalle, du premier intervalle au troisième intervalle, du deuxième intervalle au troisième intervalle, du troisième intervalle au deuxième intervalle, du deuxième intervalle au premier intervalle et du troisième intervalle au premier intervalle ;
- un moyen de transmission (63, 64) adapté pour transmettre un signal, lors de la détection d'une transition de la variable du premier intervalle au deuxième intervalle ou du premier intervalle au troisième intervalle ou du deuxième intervalle au troisième intervalle ou du troisième intervalle au deuxième intervalle ou du deuxième intervalle à la premier intervalle ou du troisième intervalle au premier intervalle, jusqu'à l'unité de traitement située à distance, lequel signal indiquant ladite transition, et comprenant une identification du dispositif (11) ou de l'appareil électrique (12) ; une indication de temps représentant le moment de la transition étant ajoutée au signal ;
dans lequel l'unité de traitement (13) est adapté pour reconstruire dans l'unité de traitement (13) la consommation de l'appareil électrique (12) en fonction du temps selon les signaux reçus ;
dans lequel soit une valeur représentant la consommation d'électricité moyenne ou momentanée est intégrée dans le signal, laquelle consommation moyenne ou momentanée est déterminée en fonction d'une ou de plusieurs valeurs de la variable mesurées après la transition, soit une indication est incluse pour indiquer dans quel intervalle parmi lesdits premier, deuxième et troisième intervalles était la variable avant la transition.

4. Système selon la revendication 3, **caractérisé en ce que** les premiers moyens de connexion (71) sont adaptés pour recevoir une prise mâle et **en ce que** les deuxièmes moyens de connexion (72) sont adaptés pour pouvoir être insérés dans une prise de courant.

5. Système selon la revendication 3 ou 4, **caractérisé en ce que** les moyens de transmission (63, 64) comprennent un émetteur-récepteur RF (63) et une antenne (64).

6. Système selon l'une quelconque des revendications 3 à 5, **caractérisé en ce que** le dispositif (11) est adapté pour pouvoir être monté sur un rail DIN d'une unité de consommation.

7. Système selon l'une quelconque des revendications 3 à 6, comprenant en outre :
un interrupteur (65) servant à interrompre la connexion électrique entre l'appareil électrique (12) et l'alimentation secteur (15) ; et une commande (66) pour l'interrupteur (65), laquelle commande (66) est conçue pour ouvrir ou pour fermer l'interrupteur (65) selon un signal de commande reçu de l'unité de traitement (69).
